# FASCICULE DE BREVET EUROPEEN

(11) **EP 1 409 430 B1**
(45) Date de publication et mention de la délivrance du brevet: **18.04.2018**
(21) Numéro de dépôt: 02762545.8
(22) Date de dépôt: 15.07.2002
(51) Int. Cl.: C04B 24/04, C04B 28/02

(54) **LIANT HYDRAULIQUE A VIEILLISSEMENT AMELIORE**
HYDRAULISCHES BINDEMITTEL MIT VERBESSERTEN ALTERUNGSEIGENSCHAFTEN
HYDRAULIC BINDER WITH ENHANCED AGING PROPERTIES

(30) Priorité: 26.07.2001 FR 0110031
(43) Date de publication de la demande: 21.04.2004
(73) Titulaire: KERNEOS, 92800 Puteaux (FR)
(72) Inventeur: JOUBERT, Daniel, F-60500 VINEUIL SAINT FIRMIN (FR); SARI, Mustapha, F-69100 VILLEURBANNE (FR); CARVALHO, Quintino, F-69006 LYON (FR)
(74) Mandataire: Jacobacci Coralis Harle
(86) Numéro de dépôt international: PCT/FR2002/002507
(87) Numéro de publication internationale: WO 2003/010109

(56) Documents cités:
- DE-B- 1 239 605
- GB-A- 841 304
- US-A- 2 478 831
- US-A- 3 955 994
- CHEMICAL ABSTRACTS, vol. 120, no. 16, 18 avril 1994 (1994-04-18) Columbus, Ohio, US; abstract no. 198874a, A.P.NIKIFOROV: "Rheological and physicomechanical properties of heavy concrete with additions of a melt of dicarboxylic acid" XP000472398 & FIZ.-KHIM. MEKH., vol. 21, 1992, pages 14-29, Kiev, Ukraine
- PATENT ABSTRACTS OF JAPAN vol. 1998, no. 09, 31 juillet 1998 (1998-07-31) & JP 10 095650 A (CHICHIBU ONODA CEMENT CORP), 14 avril 1998 (1998-04-14)

## Description

La présente invention concerne les liants minéraux notamment hydrauliques tels que ciments Portland ou alumineux à vieillissement amélioré.

Elle se rapporte plus particulièrement aux liants hydrauliques à base de silicates et/ou d'aluminates minéraux présentant une meilleure résistance au vieillissement, un procédé de fabrication de ces liants ainsi que leurs utilisations et articles obtenus avec de tels liants.

Les liants hydrauliques sont généralement des ciments à base de silicates et/ou d'aluminates minéraux utilisés dans de nombreuses industries, plus particulièrement dans le domaine de la construction pour la réalisation d'infrastructures de bâtiments, d'ouvrages d'art, d'immeubles ou maisons. Les ciments sont également utilisés dans l'industrie du forage et plus particulièrement dans l'industrie pétrolière.

Les liants hydrauliques sont fabriqués à partir de matériaux naturels qui sont traités à très haute température pour éliminer l'eau et transformer les matériaux en composés minéraux capables de réagir avec l'eau pour produire un liant qui après séchage forme une masse compacte présentant de bonnes propriétés mécaniques.

La poudre obtenue en sortie des broyeurs a une granulométrie inférieure à 100 µm. Cette poudre est stockée soit dans des silos soit conditionnée dans des contenants de volume plus réduit tels que des sacs avant d'être utilisée pour la fabrication de béton ou mortier par exemple. Ainsi, cette poudre peut rester dans ces stockages pendant une durée parfois très longue et être exposée notamment à l'humidité de l'air.

Bien que des précautions aient été prises dans la réalisation des contenants destinés à stocker le ciment, ou liant hydraulique, celui-ci peut motter ou prendre partiellement en masse sous l'effet de l'humidité de l'air. Un tel phénomène rend inutilisable le liant hydraulique ou rend difficile sa manipulation, par exemple son transfert depuis les silos dans les citernes de transport ou les silos d'alimentation sur les chantiers ou en usine. Ce phénomène peut affecter les propriétés des articles ou ouvrages réalisés avec un tel liant.

Comme liant hydraulique présentant de tels inconvénients, on peut citer :
- le ciment type Portland,
- le ciment alumineux ou fondu,
- le ciment prompt,
- les ciments naturels de type VICALPE et RAPIDE

Les liants hydrauliques peuvent être également conditionnés en mélange avec d'autres additifs tels que du sable pour former un mortier prêt à l'emploi. L'inconvénient précité ci-dessus est également observé avec ce type de composition.

On connaît également de l'état de la technique, la publication de Nikiforov : « Rheological and physicomechanical properties of heavy concrete », POVERCHNOST: RENGENOVSKIE, SINCHROTRONNYE I NEJTRONNYE ISSLEDOVANIJA/ROSSIJSKAJA AKADEMIJA NAUK/PHYSIK, CHEMIE, MECHANIK, RUSSIA, vol.21, 1 janvier 1992, pages 14-20. Cette publication décrit l'utilisation d'un additif afin d'améliorer les propriétés physique de composition de ciment après prise hydraulique. Les additifs sont de préférence certains produits qui sont des produits secondaires issus de l'industrie chimique. En particulier, l'additif (PDK) est un mélange d'acides dicarboxylique de formule générale suivante : 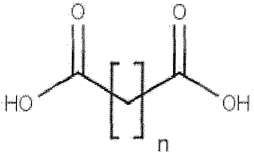 où n=2 (acide succinique), n=3 (acide glutarique) et n=4 (acide adipique).

Le document DE 12 39 605 décrit un procédé afin d'augmenter la durée de conservation d'un ciment. Cet effet est obtenu par l'addition de composés hydrophobes comprenant une partie aliphatique substituée et une partie aromatique aliphatique.

Le document US 2 478 831 décrit des liants hydrauliques contenant des acides dicarboxyliques avec de longues chaînes aliphatiques ou les esters de ces diacides, par exemple, l'acide sébacique.

Le document DE 23 12 888 décrit un procédé de fabrication d'un ciment comprenant ;
- le mélange d'un additif comprenant un dispersant et d'un agent réducteur de tension superficielle, avec un clinker de ciment ;
- le broyage du mélange de sorte à revêtir au moins partiellement les particules de ciment de l'additif ;
- l'ajout d'eau pour obtenir la prise du ciment présentant des propriétés améliorées, notamment en ce qui concerne l'efflorescence.

Un des buts de la présente invention est de proposer un traitement des liants hydrauliques permettant de diminuer très fortement ou d'éviter les phénomènes de mottage ou de prise en masse des poudres pendant leur stockage, avant utilisation finale.

A cet effet, l'invention a pour premier objet, des liants hydrauliques à base de silicates et/ou aluminates minéraux tels que définis en revendication 1 et comprenant notamment un composé organique comportant au moins deux fonctions à caractère hydrophile et une chaîne organique à caractère hydrophobe consistant en un acide adipique ou un mélange d'acide adipique, acide glutarique, acide succinique.

La concentration pondérale de ce composé organique dans le liant hydraulique est comprise entre 0,05 et 5% en poids par rapport au poids de liant hydraulique, avantageusement entre 0,1% et 2%.

Par fonction à caractère hydrophile, on entend des fonctions qui permettent d'obtenir une compatibilité avec un milieu contenant de l'eau. De plus, ces fonctions hydrophiles ont avantageusement la capacité de réagir avec les cations ou éléments métalliques présents dans le liant hydraulique.

.Selon une autre caractéristique de l'invention, le composé organique est avantageusement mélangé à la poudre de liant obtenue après cuisson. Le composé organique est ajouté soit sous forme de poudre ou granulés, soit sous forme liquide pour ainsi imprégner ou enrober les grains formant la poudre de liant organique. Les composés organiques présentant un caractère filmogène seront donc préférés. Toutefois, cette propriété est uniquement souhaitée de manière préférentielle. Ainsi, un composé organique non filmogène mais mouillant et s'adsorbant sur les grains de liant hydraulique est également convenable pour l'invention.

Dans le cadre de l'invention, le liant hydraulique peut être soit un ciment, soit une composition comprenant un ciment avec différents additifs pour constituer une composition prête à l'emploi après addition d'eau et éventuellement de charges comme du sable.

Comme composé organique selon l'invention, on peut citer l'acide adipique et ou un mélange d'acide adipique, succinique et glutarique. Ce mélange est un sous-produit dans les procédés industriels de fabrication de l'acide adipique.

Les liants conformes à l'invention sont moins sensibles à la reprise d'humidité permettant ainsi d'augmenter leur durée de conservation dans les différents conditionnements tels que silos, sacs, containers, par exemple. De plus, la coulabilité de la poudre est améliorée lors de l'opération de vidange des emballages.

Un autre objet de l'invention réside dans le procédé de fabrication des liants hydrauliques à vieillissement amélioré. Ce procédé consiste à mélanger la poudre de liant hydraulique sortant des fours de fabrication avec le composé organique en poudre ou à l'état fondu à une température convenable pour éviter la dégradation du composé organique. Cette température ou domaine de température dépend, bien entendu, de la nature du composé organique. Ainsi, dans un premier mode de réalisation de l'invention, la température est déterminée pour être inférieure à la température de dégradation sensible du composé organique, et supérieure à la température de fusion ou de ramollissement de ce composé. Dans un second mode de réalisation, l'enrobage des grains de liant hydraulique est réalisé à une température basse, par exemple à température ambiante, et plus généralement dans un domaine de températures dans lequel le composé organique est à l'état solide.

A titre d'exemple, avec l'acide adipique ou les mélanges acides adipique, glutarique, succinique, cette température est comprise entre 140° C et 170°C.

Ainsi, le composé organique, notamment l'acide adipique peut être ajouté au ciment au cours de l'étape de broyage des clinkers en sortie des fours.

Le composé organique utilisé pour le mélange peut être sous forme de granulés ou poudre dont les grains peuvent être fins ou grossiers. Ce composé organique peut être ajouté à l'état fondu au liant hydraulique.

Il est également possible de mélanger notamment à froid le composé organique sous forme de poudre fine, par exemple comprenant des particules de taille moyenne inférieure à 50 µm, préférentiellement de taille nettement inférieure à la taille des grains de liant pour ainsi obtenir un revêtement des grains de liant par les particules de composé organique.

L'invention a également pour objet l'utilisation de ces liants minéraux notamment hydrauliques pour la fabrication de mortier, béton ou autres compositions habituelles à base de liants minéraux. Il est remarquable que la présence du composé organique n'affecte pas les conditions de réalisation de ces compositions telles que mortier, béton ni leurs propriétés mécaniques et rhéologiques. Au contraire, elle peut, dans certaines applications, améliorer les procédés de mise en oeuvre et les propriétés mécaniques des produits ou articles réalisés avec ces compositions.

Les exemples ci-dessous donnés uniquement à titre indicatif illustrent l'invention plus en détail.

### L'abréviation AA signifie acide adipique

### Exemples 1 et 2 (exemples selon l'invention)

Une poudre de ciment Portland est mélangée avec des particules d'acide adipique. L'ensemble est porté à une température de 160°c pendant une heure sous agitation pour l'exemple 2. Au contraire, le mélange est réalisé à température ambiante pour l'exemple 1. Le mélange est réalisé dans un mélangeur à agitation turbulente.

Des échantillons (20 g) de la poudre obtenue sont disposés dans des récipients présentant une surface d'exposition de 20 cm2. Ces récipients sont placés dans une enceinte maintenue à température ambiante et présentant une humidité relative de 75 % à température ambiante (15-25°C).

La reprise en eau exprimé en masse d'eau adsorbée pour 1 00 g de liant de ces échantillons est déterminée par pesée après des durées d'exposition différentes. Les résultats obtenus sont indiqués dans le tableau 1 ci-dessous.

**Tableau I**

| Exemple | comparatif | 1 | 2 |
|---|---|---|---|
| | Ciment Portland | Ciment Portland +0,2% AA (particules de taille environ 15 µm) | Ciment Portland +0,2%AA (particules de taille environ 250 µm) |
| 7 jours | **1,00** | **0,00** | **0,25** |
| 15 jours | **1,25** | **0,34** | **0,69** |
| 21 jours | **1,31** | **0,56** | **0,86** |
| 25 jours | **1,41** | **0,80** | **0,99** |

### Exemples 3 (exemple selon l'invention)

Plusieurs poudres de liants hydrauliques différents ont été mélangés avec 0,5% d'acide adipique en particules de taille moyenne 15 µm, selon la procédure décrite à l'exemple 1. Ces poudres ont été exposées à une atmosphère présentant une humidité relative de 75 % à température ambiante. Les reprises d'humidité de ces différentes poudres après une exposition de 8 jours sont indiquées dans le tableau II ci-dessous.

**Tableau II**

| | Témoin sans acide adipique | Liant avec 0.5% en poids d'acide adipique |
|---|---|---|
| Ciment alumineux | 0,24 | 0,06 |
| Ciment prompt | 1,63 | 1,18 |
| Ciment prompt Vicalpes® | 1,66 | 1,34 |

### Exemple 4 (exemple selon l'invention)

Du ciment Portland est mélangé avec des quantités différentes de particules d'acide adipique de taille moyenne 15 µm à température ambiante. Ces mélanges sont disposés dans des récipients présentant une surface d'exposition de 80 cm2 pour une masse d'échantillon de 20 g.

Les récipients sont disposés dans une enceinte présentant une atmosphère avec une humidité relative de 75 % à température ambiante.

Les reprises en eau de ces échantillons après différentes durées d'exposition sont rassemblées dans le tableau III ci-dessous.

**Tableau III**

| | 1 Jour | 2 Jours | 3 Jours | 5 Jours | 6 Jours | 7 Jours | 9 Jours | 14 Jours |
|---|---|---|---|---|---|---|---|---|
| Témoin | 0,95 | 1,28 | 1,51 | 3,75 | 10,80 | 10,80 | 11,30 | 22,14 |
| Ciment +0,1% AA | 0,25 | 0,35 | 0,40 | 0,90 | 2,30 | 2,34 | 2,55 | 3,22 |
| Ciment + 0,2%AA | 0,12 | 0,18 | 0,22 | 0,34 | 0,38 | 0,45 | 0,47 | 1,90 |
| Ciment +0,3% AA | 0,12 | 0,20 | 0,26 | 0,40 | 0,44 | 0,72 | 0,80 | 3,10 |

### Exemple 5 (exemple selon l'état de la technique)

L'exemple 1 a été répété mais en remplaçant la poudre d'acide adipique par 0,5 % en poids d'acide brassylique de taille moyenne de particules environ 20 µm.

Après 10 jours de maintien dans une atmosphère avec une humidité relative de 75 % à température ambiante, la reprise en eau est de 1,05 g d'eau pour 100 g de liant. Sans addition de composé organique, le liant reprend 1,40 g d'eau pour 100 g de liant dans des conditions analogues.

## Revendications

1. Liant hydraulique en poudre à base de silicate et/ou d'aluminate présentant une tendance réduite à l'agglomération ou prise en masse au cours du stockage,
**caractérisé en ce qu'**il comprend
- un composé organique acide choisi dans le groupe consistant en un acide adipique ou un mélange d'acide adipique, acide glutarique, acide succinique, **en ce que** la concentration pondérale en acide organique est comprise entre 0.05 % et 5 % par rapport au poids de liant hydraulique,
- et comme composant principal, un ciment choisi parmi le ciment type Portland, le ciment alumineux ou fondu, le ciment prompt,
le liant hydraulique étant préparé par mélange dudit composé organique avec le liant hydraulique sous forme de poudre.

2. Liant hydraulique selon la revendication 1, **caractérisé en ce que** la concentration pondérale en composé organique est comprise entre 0,1 % et 2 % par rapport au poids de liant.

3. Procédé de fabrication d'un liant hydraulique selon l'une des revendications précédentes, **caractérisé en ce qu'**il consiste à mélanger le composé organique acide, sous forme de poudre fine ou à l'état fondu avec le ciment.

4. Procédé selon la revendication 3, **caractérisé en ce que** le mélange est maintenu à une température comprise entre 140°C et 170°C, sous forme agitée.

5. Procédé selon la revendication 3, **caractérisé en ce que** le mélange est réalisé à température ambiante avec une poudre de composé organique acide comprenant des particules de taille inférieure à 50 µm.

6. Utilisation d'un liant hydraulique selon la revendication 1 ou 2, pour la fabrication de mortier.

## Patentansprüche

1. Pulverförmiges hydraulisches Bindemittel auf Grundlage von Silikat und/oder Aluminat mit verminderter Tendenz zur Verklumpung oder zum Festwerden während der Lagerung,
**dadurch gekennzeichnet, dass** es Folgendes umfasst:
- eine saure organische Verbindung, ausgewählt aus der Gruppe bestehend aus Adipinsäure oder einer Mischung aus Adipinsäure, Glutarsäure und Bernsteinsäure, wobei die Gewichtskonzentration an organischer Säure zwischen 0,05% und 5% in Bezug auf das Gewicht des hydraulischen Bindemittels beträgt,
- und als Hauptbestandteil einen Zement, ausgewählt aus Portlandzement, Aluminat- oder Schmelzzement und Schnellzement,
wobei das hydraulische Bindemittel durch Mischen der organischen Verbindung mit dem hydraulischen Bindemittel in Pulverform hergestellt wird.

2. Hydraulisches Bindemittel nach Anspruch 1, **dadurch gekennzeichnet, dass** die Gewichtskonzentration an organischer Verbindung zwischen 0,1% und 2% in Bezug auf das Gewicht des Bindemittels beträgt.

3. Verfahren zur Herstellung eines hydraulischen Bindemittels nach einem der vorhergehenden Ansprüche, **dadurch gekennzeichnet, dass** es darin besteht, dass man die saure organische Verbindung in Form eines feinen Pulvers oder im geschmolzenen Zustand mit dem Zement vermischt.

4. Verfahren nach Anspruch 3, **dadurch gekennzeichnet, dass** die Mischung bei einer Temperatur von zwischen 140 °C und 170 °C und unter Rühren gehalten wird.

5. Verfahren nach Anspruch 3, **dadurch gekennzeichnet, dass** die Mischung bei Raumtemperatur mit einem Pulver der sauren organischen Verbindung, umfassend Teilchen mit einer Größe von unter 50 µm, hergestellt wird.

6. Verwendung eines hydraulischen Bindemittels nach Anspruch 1 oder 2 zur Herstellung von Mörtel.

## Claims

1. A powdered hydraulic binder based on silicates and/or aluminate having reduced tendency to clump or set during storage,
**characterized in that** it comprises
- an organic acid selected from the group consisting of adipic acid and a mixture of adipic, glutaric and succinic acids, wherein the weight concentration of said organic acid is between 0.05 percent and 5 percent relative to the weight of hydraulic binder,
- and as main component, a cement selected from the group consisting of Portland cement, high-alumina cement and quick-setting cement,
the hydraulic binder being prepared by blending said organic acid with the hydraulic binder in powder form.

2. Hydraulic binder according to claim 1, **characterized in that** the weight concentration of said organic acid is between 0.1 percent and 2 percent relative to the weight of hydraulic binder.

3. Process for manufacturing a hydraulic binder according to any one of the preceding claims, **characterized in that** it consists in blending the organic acid in fine powder form or in the melt state with the cement.

4. Process according to 3, wherein the blending is carried out at temperature of between 140° C. and 170° C. in agitated form.

5. Process according to 3, wherein the blending is carried out at room temperature with a powder of organic compound having particles with a size of less than 50 µm.

6. Use of a hydraulic binder according to claim 1 or claim 2 for the manufacturing of a mortar.
